(19) **Europäisches Patentamt**
**European Patent Office**
**Office européen des brevets**

(11) **EP 2 810 851 A1**

(12) **EUROPEAN PATENT APPLICATION**

(43) Date of publication:
**10.12.2014 Bulletin 2014/50**

(51) Int Cl.:
**B62D 5/04** (2006.01)

(21) Application number: **14170757.0**

(22) Date of filing: **02.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.06.2013 JP 2013117870**

(71) Applicant: **JTEKT CORPORATION**
**Osaka-shi**
**Osaka 542-8502 (JP)**

(72) Inventor: **Tsukagoshi, Masayuki**
**Osaka-shi,, Osaka 542-8502 (JP)**

(74) Representative: **Winter, Brandl, Fürniss, Hübner, Röss, Kaiser, Polte - Partnerschaft mbB**
**Patent- und Rechtsanwaltskanzlei**
**Bavariaring 10**
**80336 München (DE)**

(54) **Steering system**

(57)     A ball nut (42) of a steering system has an external thread portion (42a) at a first end portion, and a flange (42b) at a second end portion. A ball bearing (44), a flange member (45) and a driven pulley (32) are sandwiched between a locknut (46) and the flange (42b) in the axial direction of the ball nut (42). As one of side portions of a belt (33) abuts against the flange member (45) or the flange (42b), the belt (33) is restrained from coming off the driven pulley (32).

FIG.2

## Description

BACKGROUND OF THE INVENTION

1. Field of the Invention

The invention relates to a steering system.

2. Description of the Related Art

As described in, for example, Japanese Patent Application Publication No. 2012-224191 (JP 2012-224191 A), there is a conventional electric power steering system in which the speed of rotation output from a motor is reduced by a belt transmission mechanism, and the rotation with a reduced speed is converted into an axial motion of a rack shaft by a ball screw mechanism provided on the rack shaft. The belt transmission mechanism includes a drive pulley provided on a rotary shaft of the motor, a driven pulley provided on a ball nut fitted on a ball screw portion of the rack shaft via multiple balls, and a belt looped over the drive pulley and the driven pulley. The rack shaft is moved in its axial direction in response to the rotation of the ball nut caused through driving of the motor, so that a driver's steering operation is assisted.

In order to reduce loss in torque transmission due to slippage of the belt, toothed pulleys are adopted as the drive pulley and the driven pulley, and a toothed belt is adopted as the belt. The belt may be displaced in the axial direction of the pulleys during the rotation of the pulleys. Thus, restricting flanges that restrict displacement of the belt are formed integrally with respective axial end portions of each of the pulleys so as to extend radially outward of the pulleys. However, if this configuration is adopted, teeth need to be formed on each pulley at positions between the two restricting flanges, and therefore the restriction flanges hinder formation of the teeth.

In view of this, as described in, for example, Japanese Patent Application Publication No. 2003-343700 (JP 2003-343700 A), there is proposed a toothed pulley provided with a pair of restricting members that serve as the above-described restricting flanges and that are attached to opposite sides of a pulley body on which teeth are formed. With this configuration, because the restricting members are attached to the pulley body after the teeth are formed on the pulley body, the restricting members do not hinder formation of the teeth. The restricting members are attached to the pulley body by swaging, welding or the like.

However, if the configuration in which the restricting members are attached to the pulley body as described in JP 2003-343700 A is adopted, a fixing work such as swaging is additionally required, and accordingly the number of man-hours for assembling the toothed pulley is increased. In recent years, the energy saving effect exhibited by an electric power steering system has received widespread attention, and therefore the number of types of vehicles in which an electric power steering system is installed has been increasing. On the other hand, the demand for reduction in the number of manhours for assembly has been increasing in view of enhancement of the productivity of manufacturing an electric power steering system.

SUMMARY OF THE INVENTION

One object of the invention is to provide a steering system that is assembled with a reduced number of man-hours.

A steering system according to an aspect of the invention includes: a steered shaft that makes a linear motion in a housing to steer steered wheels; a drive pulley that is disposed in the housing, and that rotates about an axis extending parallel to an axis of the steered shaft in response to driving of a motor; a ball nut screwed to the steered shaft via multiple balls, and supported via a bearing by an inner peripheral face of the housing so as to be rotatable relative to the inner peripheral face of the housing; a driven pulley fitted to an outer periphery of the ball nut; a belt looped over the drive pulley and the driven pulley; a first restricting member having a flange shape, and disposed at a side portion of the driven pulley, the side portion being located close to the bearing; a retaining member disposed at a first end portion of the ball nut; and a second restricting member that has a flange shape, that is provided at a second end portion of the ball nut, that holds the bearing and the driven pulley between the second restricting member and the retaining member in an axial direction of the steered shaft, and that restricts displacement of the belt in the axial direction of the steered shaft in cooperation with the first restricting member.

With this configuration, the second restricting member provided at the second end portion of the ball nut has not only the function of holding the bearing and the driven pulley between the second restricting member and the retaining member disposed at the first end portion of the ball nut, but also the function of restraining the belt from coming off the driven pulley in the axial direction of the steered shaft in cooperation with the first restricting member provided at the bearing-side side portion of the driven pulley. That is, the second restricting member has the two functions. Thus, the number of components and consequently the number of man-hours required for the assembly of the steering system are made smaller than those when different components provide the two functions.

In the steering system according to the above aspect, the first restricting member may be interposed between the bearing and the driven pulley, and then sandwiched together with the bearing and the driven pulley between the retaining member and the second restricting member to be secured to the outer periphery of the ball nut.

With this configuration, it is not necessary to fit the first restricting member directly to the driven pulley, and accordingly the number of man-hours required for the assembly of the steering system is reduced.

In the steering system according to the above aspect, the retaining member may be a locknut fastened to the first end portion.

With this configuration, just by fastening the locknut to the first end portion of the ball nut, the bearing, the first restricting member and the driven pulley are sandwiched between the locknut and the second restricting member in the axial direction of the ball nut. Thus, a work for assembling the steering system is simplified.

BRIEF DESCRIPTION OF THE DRAWINGS

The foregoing and further features and advantages of the invention will become apparent from the following description of example embodiments with reference to the accompanying drawings, wherein like numerals are used to represent like elements and wherein:

FIG. 1 is a front view of an electric power steering system according to an embodiment of the invention;
FIG. 2 is an enlarged sectional view of main portions of the electric power steering system according to the embodiment;
FIG. 3 is an enlarged sectional view of the configuration near a power conversion mechanism of the electric power steering system according to the embodiment; and
FIG. 4 is an enlarged sectional view of the configuration near a power conversion mechanism of an electric power steering system according to another embodiment of the invention.

DETAILED DESCRIPTION OF EMBODIMENTS

Hereinafter, a so-called rack parallel-type electric power steering system according to an embodiment of the invention will be described with reference to the accompanying drawings. A rack parallel-type electric power steering system is an electric power steering system in which a steering assist motor is disposed such that the axis of the steering assist motor is parallel to a rack shaft.

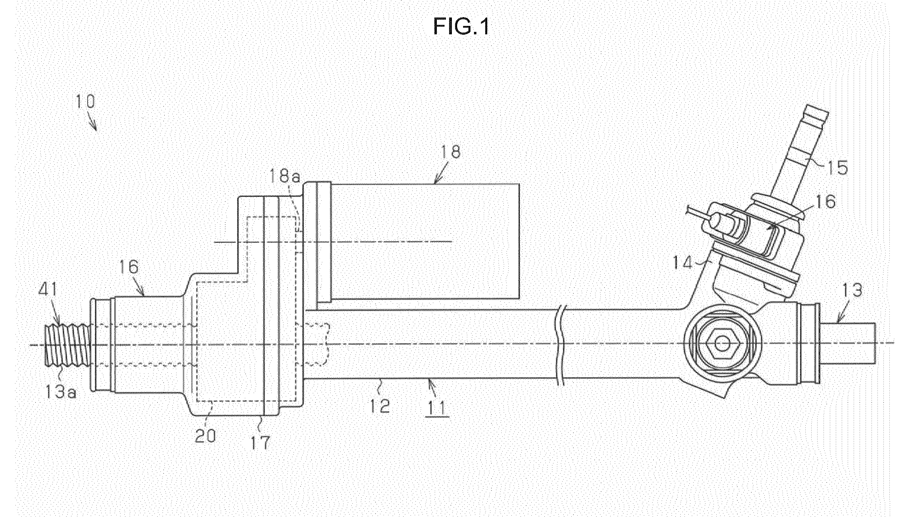

As illustrated in FIG. 1, an electric power steering system 10 includes a housing 11 secured to a vehicle body (not illustrated). The housing 11 is disposed such that a body 12 having a tubular shape extends in the lateral direction of the vehicle body (the lateral direction in FIG. 1). A rack shaft 13 is passed through the body 12. Wheels (not illustrated) are respectively coupled to the opposite ends of the rack shaft 13 via ball joints (not illustrated). As the rack shaft 13 moves in its axial direction, the orientation of the wheels is changed.

The body 12 has a first accommodation portion 14 formed at a position near the right end of the body 12. The first accommodation portion 14 extends in a direction that obliquely intersects with the axial direction of the body 12 (the lateral direction in FIG. 1). A pinion shaft 15 is inserted in and rotatably supported by the first accommodation portion 14. Pinion teeth formed on an inner end portion of the pinion shaft 15 are meshed with rack teeth formed on a portion of the rack shaft 13 within a prescribed range located near the right end of the rack shaft 13. An outer end portion of the pinion shaft 15, which is located on the opposite side of the pinion shaft 15 from the pinion teeth, is connected to a steering wheel via a plurality of shafts (not illustrated). Thus, in response to a steering operation, the rack shaft 13 makes a linear motion in its axial direction. The torque that acts on the pinion shaft 15 in response to the steering operation is detected by a torque sensor 16 provided on the first accommodation portion 14.

The body 12 has a second accommodation portion 17 formed at a position near the left end of the body 12. The second accommodation portion 17 has a cylindrical portion having a diameter larger than that of the body 12 and having an upper portion that extends upward. A motor 18 is secured to an upper right side wall of the second accommodation portion 17. The motor 18 has an output shaft 18a that extends along an axis that is parallel to the axis of the rack shaft 13, and that is inserted into the second accommodation portion 17 through a side wall of the second accommodation portion 17. A power conversion mechanism 20 is disposed in the second accommodation portion 17. The output shaft 18a of the motor 18 is coupled to the power conversion mechanism 20. The power conversion mechanism 20 converts the rotary motion generated by the motor 18 into a linear motion of the rack shaft 13. That is, the motion of the rack shaft 13 is assisted with the use of the torque generated by the motor 18, so that the driver's steering operation is assisted. The motor 18 is controlled by a controller (not illustrated) based on, for example, a value detected by the torque sensor 16.

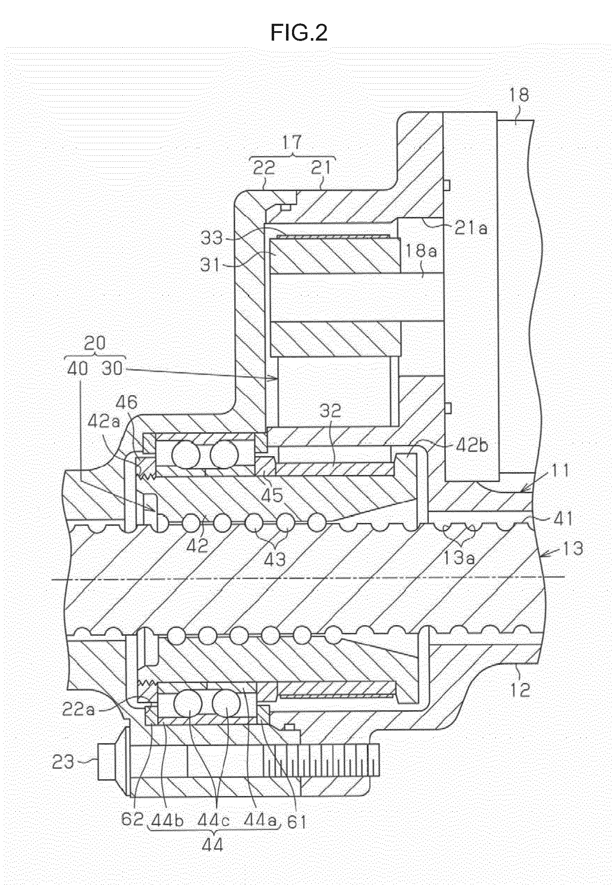

The configuration of the second accommodation portion 17 will be described in detail below. As illustrated in FIG. 2, the second accommodation portion 17 has a cylindrical support portion 21 and a stepped cylindrical cover member 22. The support portion 21 is integrally formed with the left end of the body 12. The support portion 21 has an upper portion that extends upward from the body 12, and a hole 21a is formed in a right side wall of the thus extended upper portion. The output shaft 18a of the motor 18 is inserted into the hole 21a from the right side of the hole 21a. A left opening of the support portion 21 is closed by the cover member 22. The cover member 22 is secured to the support portion 21 with bolts 23. The power conversion mechanism 20 is disposed in a space defined between the support portion 21 and the cover member 22.

As illustrated in FIG. 2, the power conversion mechanism 20 includes a belt transmission mechanism 30 and a ball screw mechanism 40. The belt transmission mechanism 30 transmits the rotary motion generated by the motor 18 to the ball screw mechanism 40. The ball screw mechanism 40 converts the rotary motion generated by the motor 18 and transmitted by the belt transmission mechanism 30 into a linear motion of the rack shaft 13.

The ball screw mechanism 40 includes a ball screw portion 41 formed in the rack shaft 13, a cylindrical ball nut 42 and multiple balls 43.

The ball screw portion 41 is a portion of the outer peripheral face of the rack shaft 13, in which a ball screw groove 13a is formed. The ball screw portion 41 is formed in a prescribed range extending toward the right end of the rack shaft 13 from the left end thereof.

The ball nut 42 is screwed to the ball screw portion 41 via the multiple balls 43 so as to be movable back and forth. An external thread portion 42a is formed on the outer peripheral face of a first end portion (the left end in FIG. 2) of the ball nut 42, and an annular flange 42b is formed on the outer peripheral face of a second end portion (the right end in FIG. 2) of the ball nut 42. The external thread portion 42a is formed in a prescribed range extending in the axial direction of the ball nut 42 from the left end of the ball nut 42. In response to the rotation of the ball nut 42, the multiple balls 43 roll between the ball nut 42 and the ball screw portion 41.

A double row ball bearing 44 is secured to the outer peripheral face of the ball nut 42. The ball nut 42 is supported via the ball bearing 44 by the housing 11 so as to be rotatable relative to the housing 1, more specifically, supported via the bearing 44 by the inner peripheral face of the cover member 22 so as to be rotatable relative to the inner peripheral face of the cover member 22. The ball bearing 44 includes an inner ring 44a, an outer ring 44b and a plurality of balls 44c. The inner ring 44a is fitted to the outer peripheral face of the ball nut 42. The outer ring 44b is fitted to the inner peripheral face of the cover member 22. In response to the rotation of the ball nut 42, the balls 44c roll between the inner ring 44a and the outer ring 44b.

The belt transmission mechanism 30 includes a cylindrical drive pulley 31, a cylindrical driven pulley 32 and an endless belt 33.

The drive pulley 31 is secured to the output shaft 18a of the motor 18. The driven pulley 32 is secured to the outer peripheral face of the ball nut 42. The driven pulley 32 and the ball bearing 44 are arranged adjacent to each other with an annular flange member 45 (described latter) being interposed therebetween in the axial direction of the ball nut 42. The ball bearing 44 is disposed at a position closer to the external thread portion 42a than the flange member 45, and the driven pulley 32 is disposed at a position closer to the flange 42b than the flange member 45. The belt 33 is looped over the drive pulley 31 and the driven pulley 32. Thus, the rotary motion generated by the motor 18 is transmitted to the ball nut 42 via the drive pulley 31, the belt 33 and the driven pulley 32. The drive pulley 31 and the driven pulley 32 are toothed pulleys (timing pulleys) each having teeth formed on its outer peripheral face. The belt 33 is a toothed belt (timing belt) having teeth formed on its inner peripheral face.

A configuration for securing the ball bearing 44 and the driven pulley 32 will be described below. As illustrated in FIG. 2, the driven pulley 32, the flange member 45 and the ball bearing 44 are fitted to the outer peripheral face of the ball nut 42, and then a locknut 46, which serves as a retaining member, is fastened to the external thread portion 42a. In this way, the driven pulley 32, the flange member 45 and ball bearing 44 are secured to the ball nut 42. Specifically, by fastening the locknut 46 to the external thread portion 42a, the ball bearing 44 (more specifically, the inner ring 44a), the flange member 45 and the driven pulley 32 are pressed against the flange member 45, the driven pulley 32 and the flange 42b, respectively. That is, the flange 42b, the driven pulley 32, the flange member 45, the ball bearing 44 and the locknut 46 are kept in surface contact with each other in the axial direction of the ball nut 42. Because the ball bearing 44, the flange member 45 and the driven pulley 32 are held between the flange 42b of the ball nut 42 and the locknut 46 in the axial direction of the ball nut 42, the axial positions of the ball bearing 44, the flange member 45 and the driven pulley 32 with respect to the ball nut 42 are fixed.

An annular support member 61 is interposed between the outer ring 44b and an opening end face of the support portion 21, and an annular support member 62 is interposed between the outer ring 44b and an annular step portion 22a formed in the inner bottom face of the cover member 22. Because the outer ring 44b is held between the support portion 21 and the cover member 22 via the support member 61 and the support member 62, the axial position of the ball bearing 44 (outer ring 44b) with respect to the cover member 22 is fixed.

The toothed pulley usually does not have a crown (a higher middle portion) unlike a flat pulley. Therefore, the belt may be slipped to one side in the axial direction of the pulley due to, for example, the parallelism of the axis, or characteristics inherent to the belt.

In the present embodiment, as the configurations for restraining the belt 33 from coming off the driven pulley 32, the flange 42b of the ball nut 42 is used and the flange member 45 is disposed between the driven pulley 32 and the ball bearing 44. The flange member 45 is fitted to the outer peripheral face of the ball nut 42, like the driven pulley 32 and the ball bearing 44.

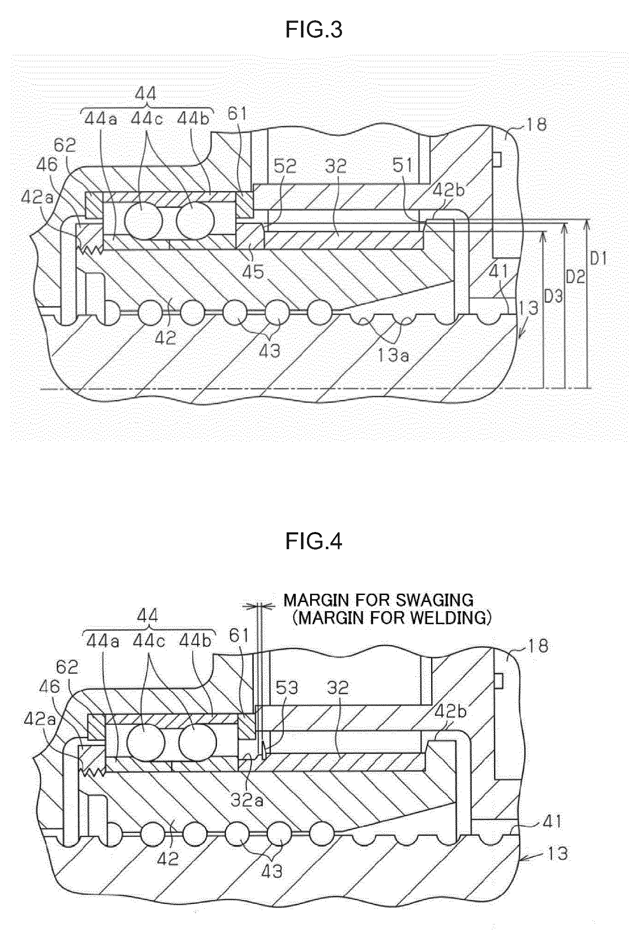

As illustrated in FIG. 3, the magnitude relationship among an outer diameter D1 of the flange 42b of the ball nut 42, an outer diameter D2 of the flange member 45 and an outer diameter D3 of the driven pulley 32 is set according to the following expression (1).

$$D1, D2 > D3 \qquad (1)$$

As long as the outer diameters D1, D2 are each larger than the outer diameter D3, the magnitude relationship between the outer diameters D1, D2 is not particularly limited. The magnitude relationship between the outer diameters D1, D2 may be set according to any one of the following expressions (2), (3), (4). In the present embodiment, the magnitude relationship between the outer diameters D1, D2 is set to the relationship defined by the following expression (3).

$$D1 = D2 \qquad (2)$$

$$D1 > D2 \qquad (3)$$

$$D1 < D2 \qquad (4)$$

As described above, each of the outer diameter D1 of the flange 42b and the outer diameter D2 of the flange member 45 is larger than the outer diameter D3 of the driven pulley 32. Thus, even if the belt 33 looped over the driven pulley 32 attempts to be displaced in the axial direction of the driven pulley 32, one of side edges of the belt 33 in its width direction (the lateral direction in FIG. 3) abuts against the flange 42b or the flange member 45, so that the displacement is restricted. Thus, it is possible to restrain the belt 33 from coming off the driven pulley 32.

The flange 42b and the flange member 45 are opposed to each other in the axial direction of the driven pulley 32. A first guide face 51 is formed on an outer periphery-side portion of a side face (a left side face in FIG. 3) of the flange 42b, which is opposed to the flange member 45. The first guide face 51 is sloped such that the thickness of the flange 42b is reduced in a direction toward the outside (the upper side in FIG. 3) of the flange 42b. A second guide face 52 is formed in an outer periphery-side portion of a side face (a right side face in FIG. 3) of the flange member 45, which is opposed to the flange 42b. The second guide face 52 is sloped such that the thickness of the flange member 45 is reduced in a direction toward the outside (the upper side in FIG. 3) of the flange member 45. During the rotation of the driven pulley 32, the first guide face 51 and the second guide face 52 are sequentially brought into contact with the side edges of the belt 33 in its width direction, and thus the belt 33 is guided to a prescribed position at which the belt 33 is meshed with the driven pulley 32, against a force with which the belt 33 attempts to be displaced in its width direction. The belt 33 is restrained from running over the flange 42b and the flange member 45. Thus, the belt 33 and the driven pulley 32 are smoothly meshed with each other.

The action of the configuration for restraining the belt 33 from coming off the driven pulley 32 will be described below. In the present embodiment, as the configurations for restraining the belt 33 from coming off the driven pulley 32, the flange 42b of the ball nut 42 is used and the flange member 45 is interposed between the driven pulley 32 and the ball bearing 44. The flange member 45 is secured by being sandwiched, together with the driven pulley 32 and the ball bearing 44, between the locknut 46 and the flange 42b. Thus, it is no longer necessary to perform a work (swaging, welding, or the like) of respectively attaching flange members for restraining the belt 33 from coming off the driven pulley 32 onto the opposite sides of the driven pulley 32. The work for attaching two flange members to the driven pulley 32 is no longer necessary, and accordingly the number of man-hours required for the assembly of the power conversion mechanism 20 is reduced, and, consequently, the number of man-hours required for the assembly of the electric power steering system 10 is reduced. Because it is no longer necessary to provide the driven pulley 32 with flange members for restraining the belt 33 from coming off the driven pulley 32, the configuration of the driven pulley 32 is simplified.

According to the present embodiment, the following advantageous effects are obtained. The ball bearing 44, the flange member 45 and the driven pulley 32 are sandwiched in the axial direction of the ball nut 42 between the locknut 46 fastened to the first end portion (external thread portion 42a) of the ball nut 42 and the flange 42b formed at the second end portion of the ball nut 42. The flange member 45 and the flange 42b protrude radially outward from the driven pulley 32 to serve as restricting members for restraining the belt 33 from coming off the driven pulley 32. Because the flange 42b of the ball nut 42 also serves as one of the two restricting members as described above, it is possible to reduce the number of components or the number of kinds of components at least by one, which is the number of one of the restricting members. As a result, it is possible to reduce the number of man-hours required for the assembly of the electric power steering system 10. It is also possible to reduce the cost.

The flange member 45, which serves as the other one of the two restricting members and which is other than the flange 42b, is a member independent from the driven pulley 32. The flange member 45 interposed between the ball bearing 44 and the driven pulley 32 is sandwiched between the locknut 46 and the flange 42b to be secured to the outer peripheral face of the ball nut 42. With this configuration, it is not necessary to attach the flange member 45 directly to the driven pulley 32, and accordingly the number of man-hours required for the assembly of the electric power steering system 10 is reduced.

Just by fastening the locknut 46 to the external thread portion 42a formed on the first end portion of the ball nut 42, the ball bearing 44, the flange member 45

and the driven pulley 32 are sandwiched between the locknut 46 and the flange 42b in the axial direction of the ball nut 42. Thus, it is possible to simplify the work of assembling the electric power steering system 10.

When restricting members such as flange members for preventing a belt from coming off a pulley are secured to the pulley by swaging or welding, it is necessary to ensure a margin for swaging or welding in each of the opposite side portions of the pulley. For example, the flange members may be fixedly fitted to small-diameter portions formed in the opposite side portions of the pulley. However, in this case, the small-diameter portions need to be protruded from the outer faces of the flange members by a length corresponding to the margin for swaging or welding. Thus, it is difficult to make the opposite side portions of the pulley flat without steps. Thus, the installation space for the pulley is increased by the amount corresponding to these steps. However, according to the present embodiment, for example, flange members for preventing the belt from coming off the pulley are not directly fitted to the driven pulley 32. Thus, the driven pulley 32 does not require a margin for swaging or welding, and accordingly it is possible to reduce the length of the driven pulley 32 in its axial direction.

The above-described embodiment may be modified as follows. In the embodiment described above, the flange member 45 that restrains the belt 33 from coming off from the driven pulley 32 in cooperation with the flange 42b of the ball nut 42 is sandwiched, together with the ball bearing 44 and the driven pulley 32, between the locknut 46 and the flange 42b. However, the configuration may be modified as follows.

As illustrated in FIG. 4, a small-diameter portion 32a is formed in an end portion of the driven pulley 32, which is located on the opposite side of the driven pulley 32 from the flange 42b (the left end portion in FIG. 4), and an annular flange 53 is fitted onto the small-diameter portion 32a. Then, the flange 53 is secured to the driven pulley 32 by swaging or welding. Even in this way, the number of man-hours required for assembly is smaller than that when two flange members are secured to the driven pulley 32.

In the embodiment described above, the first and second guide faces 51, 52 may be omitted. In the embodiment described above, the teeth of the drive pulley 31, the driven pulley 32 and the belt 33 may be linear teeth (spur teeth) that extend parallel to their axial direction, or may be helical teeth that obliquely intersect with their axial direction. When the helical teeth are adopted, the belt 33 is smoothly meshed with the drive pulley 31 and the driven pulley 32. Thus, occurrence of vibrations and noise is restricted.

In the embodiment described above, a toothed drive pulley, a toothed driven pulley and a toothed belt are used respectively as the drive pulley 31, the driven pulley 32 and the belt 33. Alternatively, a flat belt and flat pulleys that have no teeth may be used respectively as the drive pulley 31, the driven pulley 32 and the belt 33.

In the embodiment described above, the ball bearing 44, the flange member 45 and the driven pulley 32 are sandwiched between the locknut 46 and the flange 42b of the ball nut 42. Alternatively, the following configuration may be adopted. Instead of the locknut 46, an annular press-fit member (press-fit ring) that is press-fitted on an end portion of the ball nut 42, which is located on the opposite side of the ball nut 42 from the flange 42b, may be used as a retaining member. The ball bearing 44, the flange member 45 and the driven pulley 32 are sandwiched between the press-fit member and the flange 42b. In this case, the external thread portion 42a may be omitted from the ball nut 42.

Instead of the locknut 46, a snap ring having, for example, a C-shape may be used as a retaining member. In this case, after the flange 42b, the driven pulley 32, the flange member 45 and the ball bearing 44 are brought into surface contact with each other in the axial direction, the snap ring is fitted on the end portion of the ball nut 42, which is located on the opposite side of the ball nut 42 from the flange 42b. Even in this way, the driven pulley 32, the flange member 45 and the ball bearing 44 are kept sandwiched between the flange 42b and the snap ring.

In the embodiment described above, the flange 42b may be integrally formed with the ball nut 42 or may be formed independently from the ball nut 42. In the case where the flange 42b is formed independently from the ball nut 42, the flange 42b as an independent member may be fastened to or press-fitted to an end portion of the ball nut 42, which is located on the opposite side of the ball nut 42 from the external thread portion 42a.

In the embodiment described above, the invention is applied to the electric power steering system 10 in which the operation of the rack shaft 13 that makes a linear motion in response to a driver's steering operation is assisted with the use of torque generated by the motor 18. However, the invention may be applied to a steer-by-wire (SBW) steering system. The steer-by-wire steering system does not have a mechanical connection between a steering wheel and steered wheels, and a driver's operation of the steering wheel is transmitted, in the form of electronic signals, to a steering actuator. The steering actuator includes a motor, and for example, the belt transmission mechanism 30 and the ball screw mechanism 40, as the power conversion mechanism 20 that converts the rotary motion generated by the motor into a linear motion of steered shaft (ball screw shaft).

When the invention is applied to the steer-by-wire steering system, the steering system according to the invention may be adopted not only as a front wheel steering system, but also as a rear wheel steering system or a four wheel steering system (4WS).

**Claims**

1. A steering system comprising:

a steered shaft that makes a linear motion in a housing to steer steered wheels;

a drive pulley that is disposed in the housing, and that rotates about an axis extending parallel to an axis of the steered shaft in response to driving of a motor;

a ball nut screwed to the steered shaft via multiple balls, and supported via a bearing by an inner peripheral face of the housing so as to be rotatable relative to the inner peripheral face of the housing;

a driven pulley fitted to an outer periphery of the ball nut;

a belt looped over the drive pulley and the driven pulley;

a first restricting member having a flange shape, and disposed at a side portion of the driven pulley, the side portion being located close to the bearing;

a retaining member disposed at a first end portion of the ball nut; and

a second restricting member that has a flange shape, that is provided at a second end portion of the ball nut, that holds the bearing and the driven pulley between the second restricting member and the retaining member in an axial direction of the steered shaft, and that restricts displacement of the belt in the axial direction of the steered shaft in cooperation with the first restricting member.

2. The steering system according to claim 1, wherein the first restricting member is interposed between the bearing and the driven pulley, and is then sandwiched together with the bearing and the driven pulley between the retaining member and the second restricting member to be secured to the outer periphery of the ball nut.

3. The steering system according to claim 1, wherein the retaining member is a locknut fastened to the first end portion.

4. The steering system according to claim 2, wherein the retaining member is a locknut fastened to the first end portion.

5. The steering system according to claim 1, wherein the retaining member is a press-fit member press-fitted to the first end portion.

6. The steering system according to claim 1, wherein guide faces that guide the belt toward an outer peripheral face of the driven pulley are formed respectively at outer peripheral edges of the first and second restricting members.

FIG.1

EP 2 810 851 A1

# FIG.2

## FIG.3

## FIG.4

MARGIN FOR SWAGING
(MARGIN FOR WELDING)

Europäisches
Patentamt

European
Patent Office

Office européen
des brevets

**EUROPEAN SEARCH REPORT**

Application Number

EP 14 17 0757

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2006 037479 A1 (ZF LENKSYSTEME GMBH [DE]) 14 February 2008 (2008-02-14) | 1,3,5 | INV. B62D5/04 |
| A | * figure 1 * | 2,6 | |
| A | WO 2011/015374 A1 (ZF LENKSYSTEME GMBH [DE]; BAREIS HELMUT [DE]; SCHAENZEL RAINER [DE]; S) 10 February 2011 (2011-02-10) * figure 1 * | 1 | |
| A | DE 10 2008 013128 A1 (SCHAEFFLER KG [DE]) 10 September 2009 (2009-09-10) * figures 2-4 * | 1 | |
| A | EP 1 920 993 A2 (SCHAEFFLER KG [DE] SCHAEFFLER TECHNOLOGIES GMBH [DE]) 14 May 2008 (2008-05-14) * figure 2 * | 1 | |
| A,D | JP 2012 224191 A (JTEKT CORP) 15 November 2012 (2012-11-15) * the whole document * | 1 | TECHNICAL FIELDS SEARCHED (IPC) |
| A,D | JP 2003 343700 A (BANDO CHEMICAL IND) 3 December 2003 (2003-12-03) * the whole document * | 1 | B62D F16H |

The present search report has been drawn up for all claims

| Place of search | Date of completion of the search | Examiner |
|---|---|---|
| The Hague | 1 October 2014 | Van Prooijen, Tom |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 14 17 0757

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2014

| Patent document cited in search report | Publication date | Patent family member(s) | Publication date |
|---|---|---|---|
| DE 102006037479 A1 | 14-02-2008 | DE 102006037479 A1<br>EP 2049383 A1<br>WO 2008017541 A1 | 14-02-2008<br>22-04-2009<br>14-02-2008 |
| WO 2011015374 A1 | 10-02-2011 | NONE | |
| DE 102008013128 A1 | 10-09-2009 | DE 102008013128 A1<br>WO 2009109362 A1 | 10-09-2009<br>11-09-2009 |
| EP 1920993 A2 | 14-05-2008 | AT 506242 T<br>DE 102006053244 A1<br>EP 1920993 A2<br>ES 2362013 T3 | 15-05-2011<br>15-05-2008<br>14-05-2008<br>27-06-2011 |
| JP 2012224191 A | 15-11-2012 | NONE | |
| JP 2003343700 A | 03-12-2003 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012224191 A

- JP 2003343700 A